# EUROPÄISCHE PATENTSCHRIFT

(11) **EP 1 901 916 B1**
(45) Veröffentlichungstag und Bekanntmachung des Hinweises auf die Patenterteilung: **14.04.2010**
(21) Anmeldenummer: 05737658.4
(22) Anmeldetag: 26.04.2005
(51) Int. Cl.: B31F 5/04

(54) **VERFAHREN ZUM VERKLEBEN WENIGSTENS ZWEIER BÖGEN**
METHOD FOR STICKING TOGETHER AT LEAST TWO SHEETS
PROCEDE DE COLLAGE D'AU MOINS DEUX FEUILLES

(43) Veröffentlichungstag der Anmeldung: 26.03.2008
(73) Patentinhaber: Ravensburger Spieleverlag GmbH, 88214 Ravensburg (DE)
(72) Erfinder: KNELL, Florian, 88436 Eberhardzell-Mühlhausen (DE)
(74) Vertreter: Beyer, Andreas
(86) Internationale Anmeldenummer: PCT/EP2005/004470
(87) Internationale Veröffentlichungsnummer: WO 2006/114116

(56) Entgegenhaltungen:
- WO-A-98/15407
- DE-U1- 20 107 237
- US-A1- 2005 022 925

## Beschreibung

Die vorliegende Erfindung betrifft ein Verfahren zum Verkleben wenigstens zweier Bögen, wobei ein erster Bogen aus Karton oder Pappe und ein zweiter Bogen aus Papier oder Karton besteht. Ein solches Verfahren kommt beispielsweise bei der Herstellung eines Puzzles, eines Spielplanes für ein Gesellschaftsspiel oder auch bei der Herstellung von Spielbestandteilen wie z.B. Legekarten zum Einsatz. Verfahren dieser Art werden auch als Kaschierverfahren bezeichnet.

Bei herkömmlichen Kaschierverfahren (Siehe z.B. DE 201 07 237 U)_{,} bei denen ein Bogen aus Karton oder Pappe mit einem Bogen aus Papier oder Karton verklebt wird, beispielsweise zur Herstellung kaschierter Produkte, die später zu Puzzles oder Spielplänen weiterverarbeitet werden sollen, wird zum Verkleben ein Kaltleim verwendet. Ein solcher Kaltleim ist ein Dispersionsleim, der bei Raumtemperatur verarbeitet wird und der aus feinst in Wasser verteilten Kunststoffteilchen, z.B. Polymere mit einer Teilchengröße < 5 µm, besteht. Der Feststoffanteil des Dispersionsleims beträgt üblicherweise zwischen 50 und 60 %. Dispersionsleim ist physiologisch unbedenklich (wichtig für Spielprodukte) und preiswert. Allerdings tritt bei mit Kaltleim kaschierten Produkten aus Karton oder Pappe und Papier ein Problem auf, das mit dem Begriff "Schüsselung" oder auch "Tellereffekt" bezeichnet wird. Gemeint ist damit, dass das fertig kaschierte Produkt nach dem relativ lang dauernden Trocknungsprozess nicht plan ist, sondern dass seine Ränder mehr oder weniger weit nach oben gebogen sind. Dieser "Tellereffekt" führt zu Weiterverarbeitungsverlusten sowie Kundenreklamationen und beeinflusst deshalb die Qualität des Endproduktes negativ.

Zur Lösung des genannten Problems wurde versucht, den aus Karton oder Pappe bestehenden ersten Bogen so zu fertigen, dass er eine dem erwarteten späteren "Tellereffekt" entgegengesetzte Wölbung aufweist. Auf diese Weise konnte das genannte Problem zwar vermindert, jedoch nicht beseitigt werden.

Der Erfindung liegt deshalb die Aufgabe zugrunde, ein Verfahren zum Verkleben eines ersten Bogens aus Karton oder Pappe mit einem zweiten Bogen aus Papier oder Karton anzugeben, bei dem das fertig kaschierte Produkt eine verbesserte Planität aufweist.

Diese Aufgabe ist erfindungsgemäß durch ein Verfahren gelöst, welches die im Patentanspruch 1 genannten Merkmale aufweist. Bei diesem Verfahren wird ein erster aus Karton oder Pappe bestehender Bogen zu einer Leimstation transportiert, sodann wird in der Leimstation auf den ersten Bogen ein synthetischer Heißleim, häufig auch als "Hotmelt" bezeichnet, in flüssigem Zustand aufgetragen und sofort darauf werden der mit dem synthetischen Heißleim beschichtete erste Bogen und ein zweiter, aus Papier oder Karton bestehender Bogen in einer Ausrichtstation zusammengeführt und anschließend zusammengepresst, um das fertig kaschierte Produkt zu bilden. Das fertig kaschierte Produkt zeichnet sich, jedenfalls dann, wenn die zu verklebenden Bögen selbst vor dem Verkleben plan sind, durch eine hervorragende Planität aus. Im Ergebnis wird eine erheblich verlustärmere Weiterverarbeitung und insgesamt eine beträchtliche Qualitätssteigerung der Endprodukte erzielt, die aus den unter Verwendung des erfindungsgemäßen Verfahrens fertig kaschierten Produkten erhalten werden.

Als weiterer Vorteil des erfindungsgemäßen Verfahrens ergibt sich eine enorme Verkürzung der zur Herstellung eines Endproduktes, beispielsweise eines Puzzles oder Spielplans, notwendigen Zeit, denn bei dem herkömmlichen, Kaltleim verwendenden Verfahren muss das durch Verkleben zweier Bögen entstandene, kaschierte Produkt abhängig von der Raumtemperatur und der gewählten Stapelweise 12 bis 48 Stunden trocknen, bevor eine Weiterverarbeitung, z.B. ein Stanzen in regelmäßig oder unregelmäßig geformte Einzelteile, stattfinden kann. Bei kaschierten Produkten hingegen, die unter Verwendung des erfindungsgemäßen Verfahrens hergestellt worden sind, kann bereits kurz nach dem Zusammenpressen der beiden Bögen eine entsprechende Weiterverarbeitung stattfinden. Die maximale Wartezeit bis zu einer Weiterverarbeitung beträgt 30 Minuten, denn spätestens dann ist der verwendete synthetische Heißleim vollständig auskristallisiert. Durch Einsatz des erfindungsgemäßen Verfahrens kann somit die Fertigung deutlich schneller und flexibler auf Kundenwünsche reagieren und Endprodukte können viel schneller als bisher in die Distribution gelangen.

Ferner ist die beim erfindungsgemäßen Verfahren verwendete Leimmenge erheblich geringer als bei herkömmlichen, Kaltleim einsetzenden Verfahren, so dass sich erfindungsgemäß trotz des erheblich höheren Preises von Heißleim (Heißleim ist etwa doppelt so teuer wie Kaltleim) die Kosten des Endproduktes jedenfalls nicht erhöhen oder sogar verringern lassen.

In der einfachsten Ausführungsform des erfindungsgemäßen Verfahrens wird eine Seite des aus Karton oder Pappe bestehenden ersten Bogens mit einem zweiten aus Papier oder Karton bestehenden Bogen verklebt. Falls gewünscht kann jedoch auch die andere Seite des ersten Bogens mit einem dritten Bogen verklebt werden, der wie der zweite Bogen aus Papier oder Karton besteht. Hierzu wird auch auf die der einen Seite des ersten Bogens entgegengesetzte andere Seite ein synthetischer Heißleim in flüssigem Zustand aufgetragen, sodann wird der solchermaßen mit Heißleim beschichtete erste Bogen in einer Ausrichtstation mit dem dritten Bogen zusammengeführt und schließlich werden der erste Bogen und der dritte Bogen zusammengepresst, um sie miteinander zu verkleben. Üblicherweise werden zunächst der erste Bogen und der zweite Bogen miteinander verklebt und erst anschließend wird der dritte Bogen auf die andere Seite des ersten Bogens kaschiert. Auf diese Weise können Ränder des zweiten Bogens um die Kanten des ersten Bogens umgeschlagen und verklebt werden, bevor der dritte Bogen aufkaschiert wird. Wenn der erste Bogen ein Unterbogen und der zweite Bogen ein Oberbogen ist, dann wird der dritte Bogen als Spiegel bezeichnet, der beim fertig kaschierten Produkt die Unterseite des ersten Bogens bedeckt.

Gemäß einer bevorzugten Ausgestaltung des erfindungsgemäßen Verfahrens erfolgt das Auftragen des synthetischen Heißleims auf den ersten Bogen bei einer Temperatur im Bereich von ungefähr 150°C bis etwa 180°C. Auf diese Weise ist eine Auftragung in flüssigem Zustand und ferner ein gutes Verlaufen des aufgetragenen synthetischen Heißleims auf dem ersten Bogen gewährleistet.

Erfindungsgemäß ist der verwendete synthetische Heißleim wasserfrei und besteht zu 100 % aus thermoplastischem Material, wovon z.B. 40 % ein Polymermaterial, 35 % ein Harz und 25 % ein Wachs sein können. Durch den Wachsanteil werden die für ein gegebenes Anwendungsbeispiel erforderliche Viskosität und allgemeine Verarbeitungseigenschaften festgelegt. Der Harzanteil ist für eine schnelle Anfangshaftung mit ausreichender Adhäsionskraft zuständig, während der Polymeranteil für eine hohe endgültige Klebkraft, d.h. Belastbarkeit der ausgehärteten Verklebung sorgt.

Gemäß einer bevorzugten Ausführungsform des erfindungsgemäßen Verfahrens wird der synthetische Heißleim flächig auf den ersten Bogen aufgebracht, beispielsweise mittels einer Auftragswalze oder durch Aufsprühen mit Düsen. Es sind jedoch je nach Anwendungsfall andere Ausgestaltungen möglich, bei denen der Heißleim z.B. punktförmig, linienförmig oder in Form eines vorgegebenen Musters auf den ersten Bogen aufgetragen werden kann, um den Leimverbrauch noch weiter zu reduzieren.

Vorzugsweise ist der erste Bogen ein sogenannter Unterbogen und der zweite Bogen ein sogenannter Oberbogen, der auf die Oberseite des ersten Bogens aufkaschiert wird.

In vielen Fällen wird bei dem erfindungsgemäßen Verfahren eine Sichtseite des zweiten Bogens, d.h. des Papierbogens, bedruckt sein. Bei der Puzzleherstellung beispielsweise trägt die Sichtseite des zweiten Bogens das Motiv, das Gegenstand des Puzzles ist. Ein anderes Beispiel sind Gesellschaftsspiele mit einem "Spielbrett", bei denen die Sichtseite des zweiten Bogens den Spielplan trägt. Als noch weiteres Beispiel seien Legekarten-Spiele genannt, wie sie beispielsweise unter der bekannten Marke Memory^{®} von der Firma Ravensburger vertrieben werden und bei denen die Sichtseite des zweiten Bogens die im Spielverlauf paarweise zu findenden Motive trägt.

Wenn auch die andere Seite des ersten Bogens kaschiert werden soll, dann wird in der Regel die Sichtseite des hierzu verwendeten dritten Bogens ebenfalls bedruckt sein. Sie kann beispielsweise einen weiteren Spielplan tragen oder sie kann lediglich dekorativ bedruckt sein, beispielsweise mit dem Namen des Spieleherstellers.

Bei der Puzzleherstellung, aber nicht nur dort, müssen aus den beiden miteinander verklebten Bögen einzelne Teile hergestellt werden. Dies geschieht vorzugsweise durch Stanzen oder Schneiden, wodurch sich aus dem fertig kaschierten Produkt eine Vielzahl regelmäßig oder auch unregelmäßig geformter Teile ergeben. Werden die einzelnen Teile durch Stanzen hergestellt, dann erfolgt dieses Stanzen vorteilhaft in einem einzigen Schritt, d.h. es wird mit einem einzigen Stanzvorgang sowohl eine Stanzung in Querrichtung als auch in Längsrichtung erzeugt. Bei der Puzzleherstellung ergeben sich durch diesen einzigen Stanzvorgang dann eine Vielzahl unregelmäßig geformter Teile, die in ihrer Gesamtheit das Puzzle bilden. Bei einem Legekarten-Spiel ergeben sich durch die Stanz- oder Schneidvorgänge die Spielkärtchen.

Gemäß einer besonders bevorzugten Ausführungsform wird das erfindungsgemäße Verfahren zur Herstellung eines Puzzles nach Anspruch 9 verwendet. Hierzu wird in einer Kaschiermaschine ein Unterbogen aus Karton über einen Anleger zu einem Leimwerk der Kaschiermaschine transportiert. In dem Leimwerk wird ein synthetischer Heißleim bei einer Temperatur von ca. 150°C bis etwa 180°C in flüssiger Form vorgehalten und mittels einer Auftragswalze auf die Oberseite des Unterbogens aufgebracht. Der mit dem Heißleim beschichtete Unterbogen wird anschließend zu einer Ausrichtstation transportiert, zu der mittels eines weiteren Anlegers auch ein Oberbogen aus Papier oder Karton geführt wird, dessen Sichtseite mit dem Puzzlemotiv bedruckt ist. In der Ausrichtstation werden Ober- und Unterbogen zusammengeführt und anschließend durch Zusammenpressen miteinander verklebt. Die solchermaßen fertig kaschierten Produkte werden in einer Ablagestation auf einer Palette gestapelt und später zu einer Stanzmaschine verbracht, in der jedes einzelne fertig kaschierte Produkt durch einen einzigen Stanzvorgang in eine Vielzahl unregelmäßig geformter Puzzleteile zerschnitten wird. Vor dem Stanzvorgang kann, falls notwendig oder gewünscht, ein Beschneiden des fertig kaschierten Produkts erfolgen. Das gestanzte kaschierte Produkt wird sodann über eine Stachelwalze geführt, um die einzelnen Puzzleteile voneinander zu lösen, die daraufhin in einen Plastiksack fallen, der nach Verschließen einer Verpackungsstation zugeführt wird, in der die im Sack befindlichen Puzzleteile der entsprechenden Produktverpackung zugeordnet werden.

Gemäß einer anderen bevorzugten Ausführungsform wird das erfindungsgemäße Verfahren zur Herstellung eines Spielplans nach Anspruch 10 verwendet, wie er beispielsweise für viele Gesellschaftsspiele benötigt wird. Die einzelnen Herstellungsvorgänge entsprechen den zuvor im Zusammenhang mit der Puzzleherstellung angegebenen Schritten, allerdings entfällt das Stanzen des fertig kaschierten Produktes in eine Vielzahl unregelmäßig geformter Puzzleteile, allenfalls wird das fertig kaschierte Produkt an vorgegebenen Stellen linienförmig angeritzt oder genutet, um die Bildung eines faltbaren Spielplanes zu ermöglichen.

## Patentansprüche

1. Verfahren zum Verkleben wenigstens zweier Bögen, insbesondere zur Herstellung eines Puzzles, von denen ein erster Bogen aus Karton oder Pappe und ein zweiter Bogen aus Papier oder Karton besteht, mit den Schritten:
- Transportieren des ersten Bogens zu einer Leimstation,
- Auftragen eines Leims auf eine Seite des ersten Bogens in der Leimstation in flüssigem Zustand,
- Zusammenführen des mit dem Leim beschichteten ersten Bogens und des zweiten Bogens in einer Ausrichtstation, und
- Zusammenpressen der beiden Bögen zur Bildung eines fertig kaschierten Produkts,
**dadurch gekennzeichnet, dass** der Leim ein wasserfreier synthetischer Heißleim ist, der zu 100% aus thermoplastischem Material besteht.

2. Verfahren nach Anspruch 1,
**dadurch gekennzeichnet, dass** auf die der einen Seite entgegengesetzte andere Seite des ersten Bogens ebenfalls ein synthetischer Heißleim aufgetragen und der erste Bogen mit einem dritten Bogen aus Papier oder Karton zusammengeführt und verklebt wird.

3. Verfahren nach Anspruch 1 oder 2,
**dadurch gekennzeichnet, dass** das Auftragen des synthetischen Heißleims auf den ersten Bogen bei einer Temperatur im Bereich von ungefähr 150 °C bis etwa 180 °C erfolgt

4. Verfahren nach einem der Ansprüche 1 bis 3,
**dadurch gekennzeichnet, dass** der Heißleim flächig auf den ersten Bogen aufgetragen wird.

5. Verfahren nach einem der vorhergehenden Ansprüche,
**dadurch gekennzeichnet, dass** der erste Bogen ein Unterbogen und der zweite Bogen ein Oberbogen ist.

6. Verfahren nach einem der vorhergehenden Ansprüche,
**dadurch gekennzeichnet, dass** eine Sichtseite des zweiten Bogens bedruckt ist.

7. Verfahren nach Anspruch 6,
**dadurch gekennzeichnet, dass** die beiden miteinander verklebten Bögen durch Stanzen In eine Vielzahl einzelner Teile zerschnitten werden.

8. Verfahren nach Anspruch 7,
**dadurch gekennzeichnet, dass** die Teile unregelmäßig geformt sind und dass das Stanzen in einem einzigen Schritt erfolgt.

9. Puzzle,
**dadurch gekennzeichnet, dass** es unter Verwendung wenigstens zweier miteinander durch ein Verfahren gemäß einem der Ansprüche 1 bis 8 verklebter Bögen hergestellt worden ist.

10. Spielplan, insbesondere für ein Gesellschaftsspiel,
**dadurch gekennzeichnet, dass** er unter Verwendung wenigstens zweier miteinander durch ein Verfahren gemäß einem der Ansprüche 1 bis 8 verklebter Bögen hergestellt worden ist.

## Claims

1. Method for bonding together at least two sheets, in particular for producing a puzzle, of which a first sheet consists of cardboard or paperboard and a second sheet consists of paper or cardboard, comprising the steps:
- transporting the first sheet to a gluing station,
- applying a glue to one side of the first sheet in the gluing station in the liquid state,
- bringing together the first sheet coated with the glue and the second sheet in an aligning station, and
- pressing the two sheets together to form a finish-laminated product,
**characterised in that** the glue is a water-free synthetic hot melt which consists of 100% thermoplastic material.

2. Method according to Claim 1,
**characterised in that** a synthetic hot melt is also applied to the other side of the first sheet which is opposite the one side, and the first sheet is brought together with and bonded to a third sheet consisting of paper or cardboard.

3. Method according to Claim 1 or 2,
**characterised in that** the synthetic hot melt is applied to the first sheet at a temperature in the range of approximately 150°C to approximately 180°C.

4. Method according to any one of Claims 1 to 3,
**characterised in that** the hot melt is applied flat-wise to the first sheet.

5. Method according to any one of the preceding Claims,
**characterised in that** the first sheet is a bottom sheet and the second sheet is a top sheet.

6. Method according to any one of the preceding Claims,
**characterised in that** a face of the second sheet is printed.

7. Method according to Claim 6,
**characterised in that** the two sheets which are bonded together are cut into a plurality of individual parts by way of stamping.

8. Method according to Claim 7,
**characterised in that** the parts are irregularly shaped, and that the stamping takes place in a single step.

9. Puzzle,
**characterised in that** it has been produced using at least two sheets bonded together by way of a method according to any one of Claims 1 to 8.

10. Game plan, in particular for a table game,
**characterised in that** it has been produced using at least two sheets bonded together by way of a method according to any one of Claims 1 to 8.

## Revendications

1. Procédé de collage d'au moins deux feuilles, en particulier pour la fabrication d'un puzzle, une première feuille étant composée de carton et une deuxième feuille de papier ou de carton, et ledit procédé comprenant les étapes suivantes :
- transport de la première feuille vers une station de collage
- application d'une colle à l'état liquide sur un côté de la première feuille dans la station de collage,
- assemblage de la première feuille revêtue de colle et de la deuxième feuille dans une station d'alignement, et
- compression des deux feuilles de manière à obtenir un produit contrecollé fini,
**caractérisé en ce que** la colle est une colle chaude synthétique exempte d'eau et composée à 100 % d'une matière thermodurcissable.

2. Procédé selon la revendication 1,
**caractérisé en ce qu'**une colle chaude synthétique est également appliquée sur l'autre côté opposé de la première feuille et **en ce que** la première feuille est assemblée et collée à une troisième feuille de papier ou de carton.

3. Procédé selon la revendication 1 ou 2,
**caractérisé en ce que** l'application de la colle chaude synthétique sur la première feuille s'effectue à une température située dans une plage comprise entre environ 150 °C et environ 180 °C.

4. Procédé selon l'une des revendications 1 à 3,
**caractérisé en ce que** la colle chaude est appliquée sur la surface de la première feuille.

5. Procédé selon l'une des revendications précédentes,
**caractérisé en ce que** la première feuille constitue une feuille inférieure et la deuxième feuille une feuille supérieure.

6. Procédé selon l'une des revendications précédentes,
**caractérisé en ce qu'**un côté visible de la deuxième feuille est imprimé.

7. Procédé selon la revendication 6,
**caractérisé en ce que** les deux feuilles collées l'une à l'autre sont découpées par poinçonnage en un grand nombre de pièces différentes.

8. Procédé selon la revendication 7,
**caractérisé en ce que** les pièces sont formées de manière irrégulière et que le poinçonnage est réalisé en une seule passe.

9. Puzzle,
**caractérisé en ce que** ledit puzzle a été fabriqué à partir d'au moins deux feuilles collées l'une à l'autre à l'aide d'un procédé selon l'une des revendications 1 à 8.

10. Plateau de jeu, en particulier pour un jeu de société,
**caractérisé en ce que** ledit plateau de jeu a été fabriqué à partir d'au moins deux feuilles collées l'une à l'autre à l'aide d'un procédé selon l'une des revendications 1 à 8.
